# EUROPEAN PATENT SPECIFICATION

(11) **EP 2 811 836 B1**
(45) Date of publication and mention of the grant of the patent: **02.12.2015**
(21) Application number: 13708245.9
(22) Date of filing: 11.02.2013
(51) Int. Cl.: A22B 5/00

(54) **RECTAL CUTTING DEVICE FOR CUTTING LOOSE THE RECTUM OF A SLAUGHTERED ANIMAL**
REKTUMSSCHNEIDEVORRICHTUNG ZUM HERAUSSCHNEIDEN DES REKTUMS VON SCHLACHTTIEREN
DISPOSITIF DE COUPE RECTALE POUR DÉGAGER ET COUPER LE RECTUM D'UN ANIMAL ABATTU

(30) Priority: 09.02.2012 NL 1039371
(43) Date of publication of application: 17.12.2014
(73) Proprietor: Nawi B.V., 7271 LA Borculo (NL)
(72) Inventor: LOGTENBERG, Harry, NL-3721 JV Bilthoven (NL)
(74) Representative: Griebling, Onno
(86) International application number: PCT/NL2013/000003
(87) International publication number: WO 2013/119106

(56) References cited:
- GB-A- 1 271 158

## Description

The present invention relates to a rectal cutting device for cutting loose the rectum of a slaughtered animal, especially a pig, comprising:
- a cutting member rotatably mounted on a carrying member, which cutting member comprises a cylindrical wall portion surrounding an interior space, wherein the cylindrical wall portion has a top end with a cutting edge;
- a centring mandrel arranged coaxially within the cylindrical wall portion, a free end of which reaches past the cutting edge;
- rotation driving means for rotating the cutting member with respect to the carrying member, and
- suction means for creating a vacuum inside the interior space of the cutting member.

Such a device is known from practice. An example of such a device is disclosed in EP 1,815,743 A1. **Another example of such a device is disclosed in** GB 1 271 158**.**

A device as described above facilitates for the removal of the intestinal package from the carcass of a slaughtered animal. In this process, the mandrel is inserted into the anus from the outside, the cutting member is rotated and pushed forward such as to cut the rectum of the carcass from surrounding tissue, after which the intestinal package, including the rectum, is removed from the carcass through a cut at the stomach side.

In use, the rotating cutting member cuts through the tissue surrounding the rectum and quickly moves deeper into the carcass until the cutting edge enters the abdominal cavity of the carcass. The rectum as a result is now disconnected from surrounding tissue, so that the intestinal package can be pulled out from the abdominal cavity.

It is a known problem that, without countermeasures, the rectum sometimes will be pulled back out of the carcass, and when pulling out the mandrel, the end/outside of the rectum will be polluted with faeces. When removing the intestinal package, the spoiled rectum is pulled back into the carcass where it spoils the inside of the cavity. The vacuum within the cutting cylinder serves to pull the rectum during cutting to get a clean cut and to prevent damaging the rectum with the cutting edge. Thus, while cutting, the portion of the rectum that has been cut loose from the surrounding tissue is sucked further into the cutting member; when the edge of the cutting member reaches the abdominal cavity of the carcass, the entire rectum is then contained in the interior space of the cutting member.

After the cutting process, the cutting member is pulled back from the carcass. In this respect, a disadvantage of the known device is that the loose rectum may remain stuck in the cutting member's interior space. If this is the case, pulling the cutting member results in pulling the rectum from the carcass, which may strain the rectum such that the carcass intestines are damaged and their contents soil the meat to be harvested from the carcass. Also, there is a risk that the pulled away rectum is suddenly released from the cutting member's interior space, such that the rectum is elastically pulled back into the carcass, and again there is a risk of contents of the rectum spilling out from the anus and soiling meat to be harvested.

Intestinal bacteria pose a health risk. For this reason, it is essential to prevent the carcass from being soiled with intestinal bacteria. To this end, the present invention aims to provide an improved rectal cutting device, in which the above-described disadvantages of the known device are overcome, or at least to some extent diminished.

To this end, the invention provides the device of claim 1.

With a device according to the invention, any matter contained in the cutting member's interior space after the cutting process can be pushed out by the ejecting member in a controlled manner. To this end, at the start of the cutting process, the ejecting member is positioned at a relatively large distance from the cutting member's cutting edge, such as to allow the rectum to enter the interior space. After the cutting process, the ejecting member is moved towards the cutting edge such as to fully push out the rectum. The rectum and the intestines of the carcass are thereby prevented from getting damaged and of elastically snapping back, and the contents thereof can thereby be prevented from spilling out uncontrollably.

In a preferred embodiment, the ejecting member has an annular shape with a central opening, wherein the centring mandrel extends through said central opening. The ejecting member can then displace matter within the interior space along the whole circumference of the mandrel.

The ejecting member is preferably guided on the centring mandrel.

The mandrel preferably comprises a first portion along which the ejecting member can travel, and a second portion adjacent said first portion and having a diameter larger than the first portion. The ejecting member is then prevented from sliding off the mandrel.

In an advantageous embodiment, the ejecting member divides the cutting member's interior space in an outer portion adjacent the cutting edge and an inner portion, wherein the suction means are arranged for creating a vacuum in the inner interior space portion. The ejecting member can then be moved away from the cutting edge by activating the suction means.

In another advantageous embodiment, the ejection driving means comprise compressor means for creating an overpressure inside the inner interior space portion. The ejecting member can then be driven towards the cutting edge by activating the compressor means.

The suction means and the compressor means are preferably connected to switching means having a main duct communicating with the cutting member's interior space, wherein the switching means are controllable to connect the main duct either to the suction means or to the compressor means.

The cutting device preferably comprises a one-way valve which in an open position allows air to flow from the outer interior space portion to the inner interior space portion. Thereby, a vacuum can be generated in the outer interior space portion by creating an vacuum in the interior space portion, wherein air is sucked from the outer interior space portion through the ejecting member. In a closed position, the valve blocks the air flow, and an overpressure can be generated in the inner interior space portion to push out the ejecting member.

In a preferred embodiment, the one-way valve comprises a flexible membrane mounted on the ejecting member, which flexible membrane is adapted to allow air flow past the ejecting member in a direction away from the cutting edge, and to counteract air flow in a direction towards the cutting edge.

The invention is described in more detail with reference to the drawings, in which:
- Figure 1 shows a rectal cutting device according to the invention;
- Figure 2 shows a detail of the cutting device of Figure 1;
- Figure 3 shows the rectal cutting device of Figure 1 at the start of a cutting step for cutting loose the rectum of a carcass;
- Figure 4 shows the rectal cutting device of Figure 1 after the cutting step, wherein a cut loose end portion of the rectum is contained in the interior space of the cutting device;
- Figure 5 shows the rectal cutting device of Figure 1 after ejecting the cut loose rectum end portion from the interior space;
- Figure 6 shows the rectal cutting device of Figure 1 after pulling it out of the carcass.

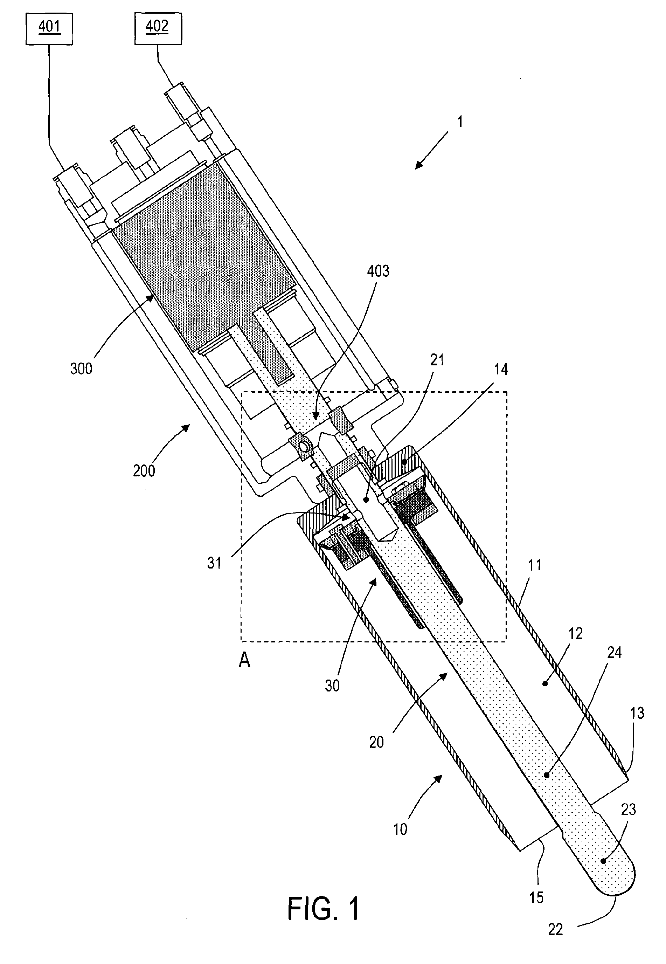

Figures 1 shows a cutting device 1 according to the invention.

The cutting device 1 comprises a cutting member 10. The cutting member 10 has a cylindrical wall portion 11 surrounding an interior space 12. At the top end of the cutting member 10, the cylindrical wall portion 11 has a cutting edge 13. At the opposite end, the cutting member 10 comprises an end wall 14 closing the interior space 12. The cutting member 10 further has a top opening 15 surrounded by the cutting edge 13.

The cutting member 10 is rotatably mounted on a carrying member 200, allowing rotation of the cutting member 10 with respect to the carrying member 200 about the central axis of the cylindrical wall portion 11. For driving the cutting member 10 with respect to the carrying member 200, the cutting device 1 comprises rotation driving means 300.

The cutting device 1 comprises a centring mandrel 20 of elongate shape, coaxially disposed in the interior space 12 of the cutting member 10. A proximal end 21 of the mandrel 20 is fixed with respect to the cutting member's end wall 14. The distal end 22 is free. The mandrel 20 extends from the interior space 12 through the cutting member's top opening 15, such that the distal end 22 reaches past the cutting edge 13.

The cutting device 1 comprises an ejecting member 30, which, in the exemplary embodiment shown, has an annular shape with a central opening 31. The ejecting member 30 is slidably arranged on the mandrel 20, with the mandrel 20 extending through the central opening 31. The ejecting member 30 is arranged such that it can axially move within the cutting member's interior space 12 between an inner position relatively close to the end wall 14 and an outer position relatively close to the cutting edge 13.

To prevent the ejecting member 30 from sliding off the centring mandrel 20 at the distal end 22, the ejecting member 30 is arranged to travel along a proximal portion 24 of the mandrel 20, wherein the mandrel 20 comprises a portion 23 distal to the proximal portion 24 which is relatively thick as compared to the proximal portion 24. In the outer position of the ejecting member 30, the ejecting member 30 abuts on said thick portion 23.

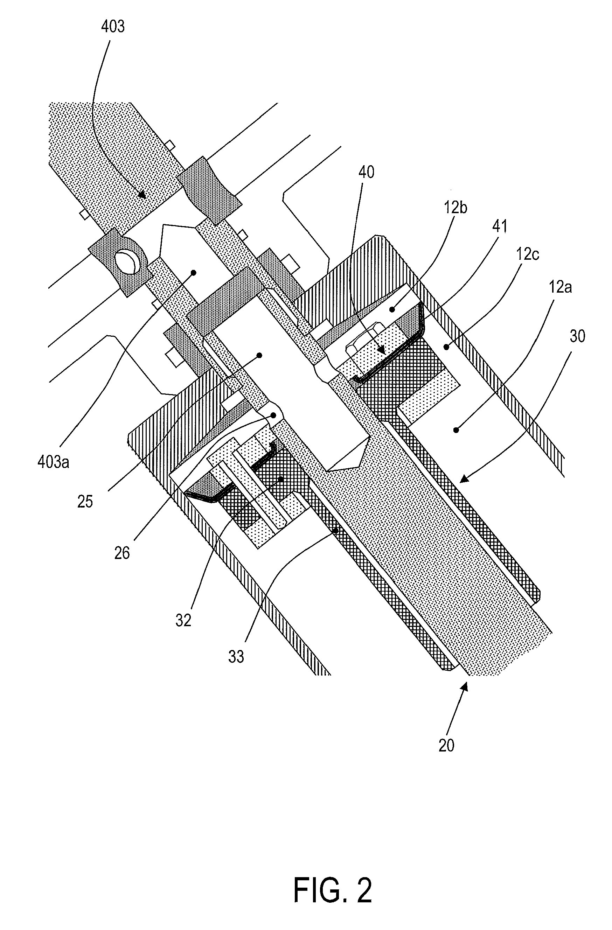

As illustrated in Figure 2, showing detail A as indicated in Figure 1, the ejecting member 30 comprises a base portion 32 slidably guided on the centring mandrel 20. An annular space 12c is formed in between the base portion 32 and the cylindrical wall portion 11 of the cutting member 10.

The base portion 32 of the ejecting member 30 divides the cutting member's interior space 12 into two portions 12a, 12b of variable size. An outer portion 12a extends between the ejecting member 30 and the cutting member's cutting edge 13. An inner portion 12b extends between the ejecting member 30 and the end wall 14. The annular space 12c surrounding the base portion 32 of the ejecting member 30 connects the outer interior space portion 12a with the inner portion 12b.

The ejecting member 30 is provided with a flexible membrane 40 for selectively closing off the annular space 12c surrounding the base portion 32 of the ejecting member 30. The membrane 40 comprises an annular outer edge portion 41 extending along the circumference of the ejecting member 30. The outer edge portion 41 is arranged such as to allow air to flow from the outer interior space portion 12a to the inner portion 12b through the annular space 12c and to prevent air flow in the opposite direction.

At a side facing away from the cutting member's end wall 11, the ejecting member 30 comprises a top portion 33. The top portion 33 has the shape of a bush and is coaxially positioned with respect to the base portion 32. The top portion 33 has an outer diameter smaller than that of the base portion 32, and an inner diameter equal to that of the thick portion 23 of the centring mandrel 20. The length of the top portion 33 substantially equals that of said thick portion 23. When the ejecting member 30 abuts on the thick portion 23, an end of the top portion 33 is substantially flush with the end of the centring mandrel 20.

As again illustrated in Figure 1, the cutting device 1 comprises suction means 401 and compressor means 402, which are each connected to a controllable switching means 403 having a main duct 403a, as illustrated in Figure 2, connected to the cutting member's interior space 12. The switching means 403 have a sucking state in which the main duct communicates with the suction means 401, and a blowing state in which the main duct communicates with the compressor means 402.

There are several ways known to the skilled person for connecting the pumping unit 10 to the cutting member 10. In the shown example, the main duct 403a of the switching means 403 is connected to a flow duct 25 passing centrally through a proximal portion of the centring mandrel 20. The flow duct 25 is connected to the cutting member's interior space 12 through a connecting opening 26 which is positioned such that the flow duct 25 is always connected to the inner interior space portion 12b, irrespective of the position of the ejecting member 30.

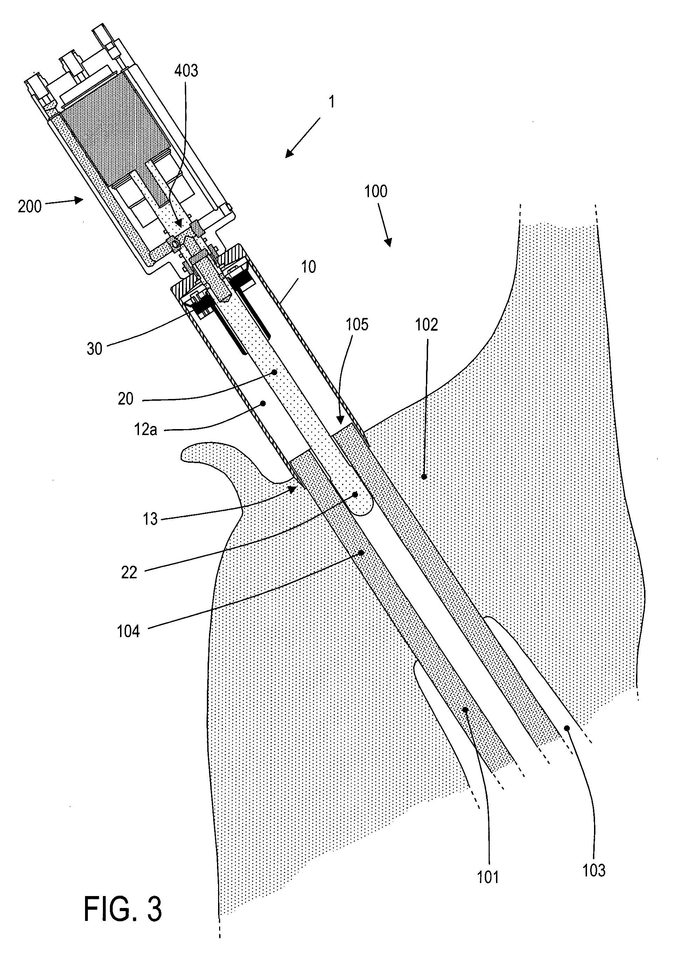

Operation of the device will now be described with reference to Figures 3-6.

Figures 3-6 show a cutting device 1 together with a portion of a carcass 100. The carcass 100 comprises a rectum 101 with an end portion 104 to be cut loose, tissue 102 surrounding the rectum end portion 104, an anal orifice 105, and an abdominal cavity 103.

At the start of the cutting step, illustrated in Figure 3, the carrying member 200 of the cutting device 1 is positioned such that the free end 22 of the centring mandrel 20 penetrates into the rectum end portion 104 through the anal orifice 105, with the cutting edge 13 of the stationary cutting member 10 in contact with tissue surrounding the orifice 105. The ejecting member 30 is situated in the inner position, the switching means 403 are in the sucking state. As a result of the vacuum within the cutting member 10, part of the rectum end portion 104 is sucked into the cutting member's outer interior space portion 12a.

In the cutting step, the cutting member 10 is activated and driven to rotate such that is cuts through the tissue 102 surrounding the rectum end portion 104. In this process, the carrying member 200 is displaced such as to move the cutting member 10 deeper into the tissue 102. During cutting, the suction means 401 maintain a vacuum in the inner interior space portion 12b of the cutting member 10, which vacuum is transferred to the outer interior space portion 12a by air being sucked past the flexible membrane 40. Parts of the rectum end portion 104 being cut loose are thereby sucked into said outer portion 12a of the interior space 12. The cutting process is continued until the rectum end portion 104 has been cut loose along its complete length. After that, the rotation of the cutting member 10 is stopped.

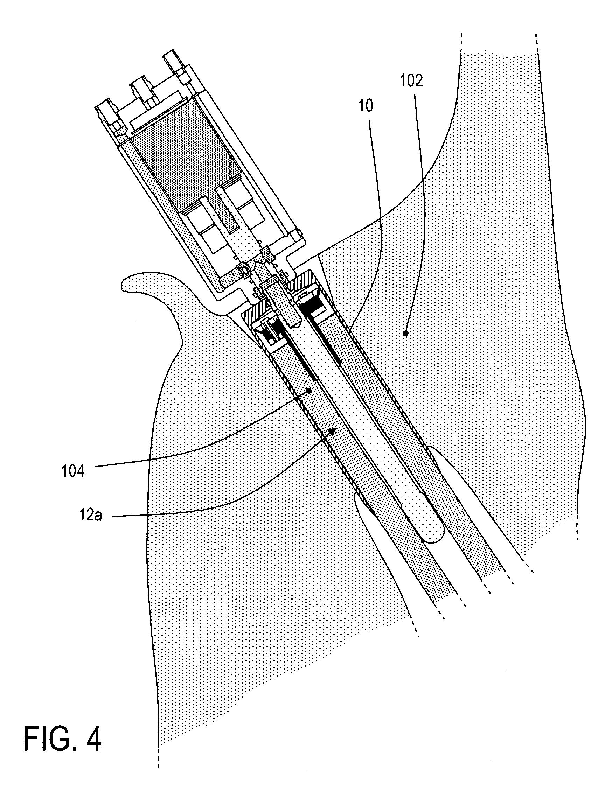

At the end of the cutting step, illustrated in Figure 4, the cutting member 10 has penetrated through the tissue 102 surrounding the rectum end portion 104. The cut loose rectum end portion 104 is then fully contained in the outer interior space portion 12a of the cutting member 10.

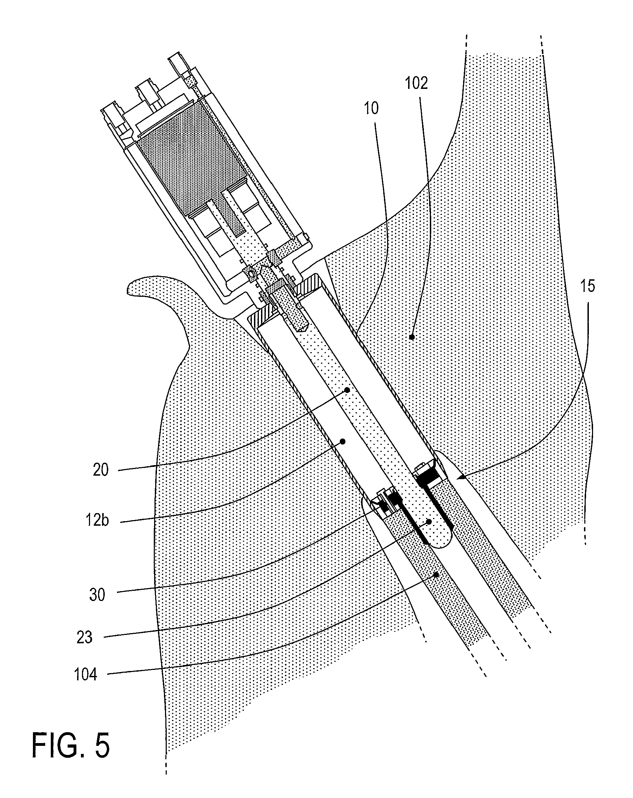

After the cutting step, an ejecting step is performed for ejecting the rectum end portion 104 from the cutting member 10, as illustrated in Figure 5. The ejecting member 30 is moved from the inner position to the outer position, wherein the ejecting member 30 travels along the centring mandrel 20 until it abuts on the mandrel's thick portion 23. While moving, the ejecting member 30 pushes the cut loose rectum end portion 104 contained in the outer interior space portion 12b towards and past the top opening 15 of the cutting member 10. The end portion 104 is thereby ejected from cutting member 10.

The axial motion of the ejecting member 30 is driven by pressurizing the inner interior space portion 12b of the cutting member 10. To that end, the switching means 403 are controlled for the main duct 403a to be disconnected from the suction means 401 and to be connected to the compressor means 402, which can then, in an active state, provide an air flow to enter the inner interior space portion 12b through the flow duct 25 provided in the centring mandrel 20.

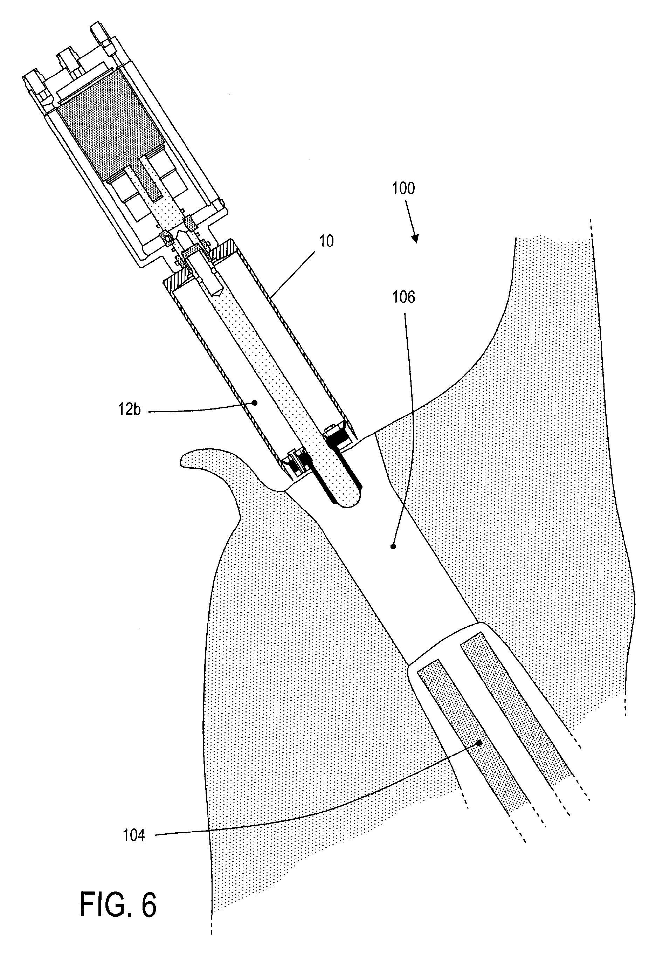

After the ejecting step, the cutting member 10 is pulled out of the carcass 100, as illustrated in Figure 6. In this step, the rectum end portion 104 remains positioned at the location where it was ejected from the cutting member 10. As a result, the cavity 106 from which rectum end portion 104 has been cut away is prevented from being soiled with faeces.

After having been extracted from the carcass 100, the cutting member 10 is sterilised by rinsing it in- and outside with a fluid. The design of the ejecting member 30 is such that it allows the fluid to reach the outer surface of the centring mandrel 20.

After rinsing, the switching means 403 are switched to the sucking state, such that the activated suction means 401 provide a vacuum inside the cutting member's inner interior space portion 12b. The ejecting member 30 is thereby sucked to move towards its inner position inside the cutting member's interior space 12. After that, the rectal cutting device 1 is ready to be used in a next cycle.

It is noted that in case an overpressure is present inside the cutting member's inner interior space portion 12b, the outer edge portion 41 of the flexible membrane 40 is pressurised such that it flexibly bends towards and comes into contact with the cutting member's cylindrical wall portion 11. Thereby, it closes off the annular space 12c connecting the inner interior space portion 12b to the outer interior space portion 12a. When a vacuum is present inside the inner interior space portion 12b, a flow of air being sucked from the outer interior space portion 12a will force said outer edge portion 41 to flexibly bend away from the cylindrical wall portion 11, thereby unblocking said annular space 12c.

It will be clear to a skilled person that the present invention is not limited to the embodiments described above, and that several variations and modifications are possible within the scope of protection of the invention as described in the attached claims.

For instance, in an alternative embodiment, the one-way valve may comprise a flexible flange extending along the circumference of the ejecting member 30. Such a flange and the ejecting member may form an integral part. Furthermore, it is also possible for the one-way valve to be designed such as to selectively close off a channel extending through the ejecting member rather than past it.

## Claims

1. Rectal cutting device for cutting loose the rectum of a slaughtered animal, comprising:
- a cutting member (10) rotatably mounted on a carrying member (200), which cutting member (10) comprises a cylindrical wall portion (11) surrounding an interior space (12), wherein the cylindrical wall portion (11) has a top end with a cutting edge (13);
- a centring mandrel (20) arranged coaxially within the cilindrical wall portion (11), a free end (22) of which reaches past the cutting edge (13);
- rotation driving means (300) for rotating the cutting member (10) with respect to the carrying member (200), and
- suction means (401) for creating a vacuum inside the interior space (12) of the cutting member (10),
**characterized by** an axially movable ejecting member (30) within the interior space (12) of the cutting member (10) and ejection driving means (402) for axially moving the ejecting member (30).

2. Rectal cutting device according to claim 1, wherein the ejecting member (30) has an annular shape with a central opening (31), wherein the centring mandrel (20) extends through the central opening (31).

3. Rectal cutting device according to one of the preceding claims, wherein the ejecting member (30) is guided on the centring mandrel (20).

4. Rectal cutting device according to one of the preceding claims, wherein the centring mandrel (20) comprises a first portion (24) along which the ejecting member (30) can travel, and a second portion (23) adjacent said first portion (24), which second portion (24) has a larger diameter than the first portion (23).

5. Rectal cutting device according to one of the preceding claims, wherein the ejecting member (30) divides the cutting member's (10) interior space (12) in an outer portion (12a) adjacent the cutting edge (13) and an inner portion (12b), wherein the suction means (401) are arranged for creating a vacuum in the inner portion (12b) of the interior space (12).

6. Rectal cutting device according to claim 5, wherein the ejection driving means (402) comprise compressor means (402) for creating an overpressure inside the inner portion (12b) of the interior space (12).

7. Rectal cutting device according to claim 6, wherein the suction means (401) and the compressor means (402) are connected to switching means (403) having a main duct (403a) communicating with the interior space (12) of the cutting member (10), wherein the switching means (403) are controllable to connect the main duct (403a) either to the suction means (401) or to the compressor means (402).

8. Rectal cutting device according to one of claims 5-7, further comprising a one-way valve which in an open position allows air to flow from the outer portion (12a) of the interior space (12) to the inner portion (12b).

9. Rectal cutting device according to claim 8, wherein the one-way valve comprises a flexible membrane (40) mounted on the ejecting member (30), which flexible membrane (40) is adapted to allow air flow past the ejecting member (30) in a direction away from the cutting edge (13), and to counteract air flow in a direction towards the cutting edge (13).

## Patentansprüche

1. Rektale Schneidvorrichtung zum Herausschneiden des Rektums eines geschlachteten Tieres, umfassend:
- ein Schneidelement (10), das drehbar an einem Trägerelement (200) befestigt ist, wobei das Schneidelement (10) einen zylinderförmigen Wandabschnitt (11) aufweist, der einen Innenraum (12) umgibt, wobei der zylinderförmige Wandabschnitt (11) ein oberes Ende mit einer Schneidkante (13) aufweist;
- einen Zentrierdorn (20), der koaxial innerhalb des zylinderförmigen Wandabschnitts (11) angeordnet ist, wobei ein freies Ende (22) davon über die Schneidkante (13) hinausreicht;
- Drehantriebsmittel (300) zum Drehen des Schneidelements (10) in Bezug auf das Trägerelement (200), und
- Saugmittel (401) zur Erzeugung eines Vakuums innerhalb des Innenraums (12) des Schneidelements (10),
**gekennzeichnet durch** ein axial bewegliches Ausstoßelement (30) in dem Innenraum (12) des Schneidelements (10) und Ausstoßantriebsmittel (402) zum axialen Bewegen der Ausstoßelements (30).

2. Rektale Schneidvorrichtung nach Anspruch 1, wobei das Ausstoßelement (30) eine ringförmige Gestalt mit einer zentralen Öffnung (31) aufweist, wobei der Zentrierdorn (20) sich durch die zentrale Öffnung (31) erstreckt.

3. Rektale Schneidvorrichtung nach einem der vorhergehenden Ansprüche, wobei das Ausstoßelement (30) auf dem Zentrierdorn (20) geführt wird.

4. Rektale Schneidvorrichtung nach einem der vorhergehenden Ansprüche, wobei der Zentrierdorn (20) einen ersten Abschnitt (24), entlang dessen sich das Ausstoßelement (30) bewegen kann und einen zweiten Abschnitt (23) angrenzend an den ersten Abschnitt (24) umfasst, wobei der zweite Abschnitt (24) einen größeren Durchmesser als der erste Abschnitt (23) aufweist.

5. Rektale Schneidvorrichtung nach einem der vorhergehenden Ansprüche, wobei das Ausstoßelement (30) den Innenraum (12) des Schneidelements (10) in einen äußeren Abschnitt (12a), angrenzend an die Schneidkante (13), und einen inneren Abschnitt (12b) unterteilt, wobei die Saugmittel (401) zum Erzeugen eines Vakuums in dem inneren Abschnitt (12b) des Innenraums (12) eingerichtet ist.

6. Rektale Schneidvorrichtung nach Anspruch 5, wobei die Ausstoßantriebsmittel (402) Kompressormittel (402) zum Erzeugen eines Überdrucks innerhalb des inneren Abschnitts (12b) des Innenraums (12) aufweisen.

7. Rektale Schneidvorrichtung nach Anspruch 6, wobei die Saugmittel (401) und die Kompressormitte! (402) mit Schaltmitteln (403) verbunden sind, die eine Hauptleitung (403a) aufweisen, die mit dem Innenraum (12) des Schneidelements (10) in Verbindung steht, wobei die Schaltmittel (403) steuerbar sind, um die Hauptleitung (403a) entweder mit den Saugmitteln (401) oder mit den Kompressormitteln (402) zu verbinden.

8. Rektale Schneidvorrichtung nach einem der Ansprüche 5 - 7, ferner umfassend ein Einwegventil, das in einer offenen Position ermöglicht, dass Luft von dem äußeren Abschnitt (12a) des Innenraums (12) zu dem inneren Abschnitt (12b) strömt.

9. Rektale Schneidvorrichtung nach Anspruch 8, wobei das Einwegventil eine elastische Membran (40) aufweist, die an dem Ausstoßelement (30) befestigt ist, wobei die elastische Membran (40) geeignet ist, um einen Luftstrom hinter das Ausstoßelement (30) in einer Richtung weg von der Schneidkante (13) zu ermöglichen und einem Luftstrom in einer Richtung zu der Schneidkante (13) entgegenzuwirken.

## Revendications

1. Dispositif de coupe rectale pour dégager et couper le rectum d'un animal abattu, comprenant:
- un élément de coupe (10) qui est monté de façon rotative sur un élément de support (200), ledit élément de coupe (10) comprenant une partie de paroi cylindrique (11) entourant un espace intérieur (12), dans lequel la partie de paroi cylindrique (11) présente une extrémité supérieure pourvue d'un bord de coupe (13);
- un mandrin de centrage (20) qui est agencé de façon coaxiale à l'intérieur de la partie de paroi cylindrique (11), dont une extrémité libre (22) franchit le bord de coupe (13);
- des moyens de commande de rotation (300) pour faire tourner l'élément de coupe (10) par rapport à l'élément de support (200); et
- des moyens d'aspiration (401) pour créer un vide à l'intérieur de l'espace intérieur (12) de l'élément de coupe (10),
**caractérisé par** un élément d'éjection axialement mobile (30) à l'intérieur de l'espace intérieur (12) de l'élément de coupe (10) et des moyens de commande d'éjection (402) pour déplacer axialement l'élément d'éjection (30).

2. Dispositif de coupe rectale selon la revendication 1, dans lequel l'élément d'éjection (30) présente une forme annulaire avec une ouverture centrale (31), dans lequel le mandrin de centrage (20) s'étend à travers l'ouverture centrale (31).

3. Dispositif de coupe rectale selon l'une quelconque des revendications précédentes, dans lequel l'élément d'éjection (30) est guidé sur le mandrin de centrage (20).

4. Dispositif de coupe rectale selon l'une quelconque des revendications précédentes, dans lequel le mandrin de centrage (20) comprend une première partie (24) le long de laquelle l'élément d'éjection (30) peut se déplacer, et une deuxième partie (23) adjacente à ladite première partie (24), le diamètre de la deuxième partie (24) étant plus grand que celui de la première partie (23).

5. Dispositif de coupe rectale selon l'une quelconque des revendications précédentes, dans lequel l'élément d'éjection (30) divise l'espace intérieur (12) de l'élément de coupe (10) en une partie extérieure (12a) adjacente au bord de coupe (13) et une partie intérieure (12b), dans lequel les moyens d'aspiration (401) sont agencés de manière à créer un vide dans la partie intérieure (12b) de l'espace intérieur (12).

6. Dispositif de coupe rectale selon la revendication 5, dans lequel les moyens de commande d'éjection (402) comprennent des moyens de compresseur (402) pour créer une surpression à l'intérieur de la partie intérieure (12b) de l'espace intérieur (12).

7. Dispositif de coupe rectale selon la revendication 6, dans lequel les moyens d'aspiration (401) et les moyens de compresseur (402) sont connectés à des moyens de commutation (403) comprenant un conduit principal (403a) qui communique avec l'espace intérieur (12) de l'élément de coupe (10), dans lequel les moyens de commutation (403) peuvent être commandés pour connecter le conduit principal (403a) soit aux moyens d'aspiration (401), soit aux moyens de compresseur (402).

8. Dispositif de coupe rectale selon l'une quelconque des revendications 5 à 7, comprenant en outre une soupape à une voie qui, dans une position ouverte, permet à l'air de s'écouler à partir de la partie extérieure (12a) de l'espace intérieur (12) jusqu'à la partie intérieure (12b).

9. Dispositif de coupe rectale selon la revendication 8, dans lequel la soupape à une voie comprend une membrane flexible (40) qui est montée sur l'élément d'éjection (30), ladite membrane flexible (40) étant apte à permettre un écoulement d'air au-delà de l'élément d'éjection (30) dans une direction s'écartant du bord de coupe (13), et à contrecarrer un écoulement d'air dans une direction vers le bord de coupe (13).
